(19)

Europäisches
Patentamt
European
Patent Office
Office européen
des brevets

(11) **EP 4 300 304 A1**

(12) **EUROPEAN PATENT APPLICATION**

(43) Date of publication:
**03.01.2024   Bulletin 2024/01**

(21) Application number: **23180146.5**

(22) Date of filing: **19.06.2023**

(51) International Patent Classification (IPC):
**G06F 9/48** *(2006.01)*

(52) Cooperative Patent Classification (CPC):
**G06F 9/4887; G06F 9/4893**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.06.2022   PCT/CN2022/102261**

(71) Applicant: **Orange**
**92130 Issy-les-Moulineaux (FR)**

(72) Inventors:
• **WANG, Lan**
**Beijing, 100013 (CN)**
• **YU, Lei**
**Beijing, 100191 (CN)**

(74) Representative: **Cabinet Beau de Loménie**
**158, rue de l'Université**
**75340 Paris Cedex 07 (FR)**

(54) **METHODS AND SYSTEMS FOR SCHEDULING ENERGY-EFFICIENT EXECUTION OF PERIODIC, REAL-TIME, DIRECTED-ACYCLIC-GRAPH TASKS**

(57)     According to a directed-acyclic-graph representation, each real-time task is decomposed into sub-tasks, and a timing diagram is generated representing execution of the sub-tasks on a schedule respecting their deadlines and dependencies assuming an infinite number of processor cores. The timing diagram is segmented based on sub-task release times and deadlines, and each segment includes one or more parallel threads. For each segment, dependent on its workload, the frequency and/or voltage is selected to be used by the processor node(s) that are to execute the one or more threads of the segment, so as to reduce power consumption consistent with respecting the sub-task deadlines. Execution of the sub-tasks of the segments is then scheduled assuming the processor-core frequencies and/or voltages set in the deciding step, preferably by a global earliest deadline first algorithm.

**FIG.5**

EP 4 300 304 A1

**Description**

**Field of the Invention**

The present invention relates to scheduling the execution of real-time tasks by processing apparatus, notably periodic real-time tasks that can be represented using a directed acyclic graph. Embodiments of the present invention provide scheduling methods and scheduling apparatus that seek to promote energy-efficiency and so may be called power-aware scheduling methods and systems.

**Technical Background**

There are many applications in which processing apparatus must perform real-time tasks in a repetitive manner, thus the tasks may be considered to be periodic and there is a known time period within which each instance of the task should be completed.

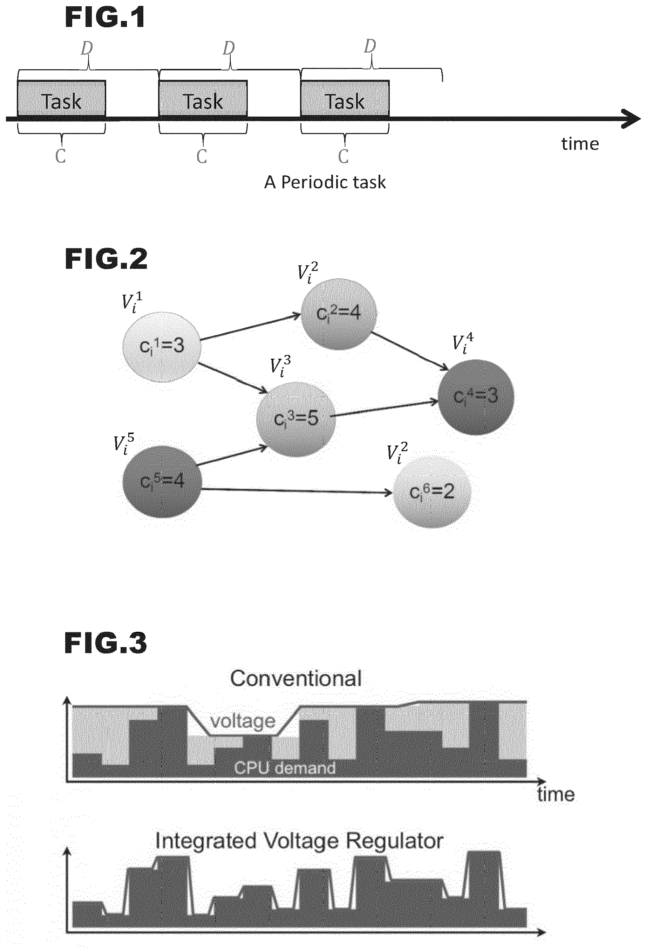

**FIG.1** is a diagram illustrating a periodic task $T$. A time $C$ is required to execute one instance of task $T$. Task $T$ requires execution periodically and the duration of the period is designated $D$. In order for the available processing apparatus to be able to cope with performing this task $T$, the processing apparatus must be capable of executing the task in a time which is less than $D$. The "utilization", $u$, of the task $T$ may be expressed by Equation (1):

Equation (1)

$$u = C / D$$

For a given set $\tau$ of tasks $\{T_1, T_2, ..., T_n\}$, $u_i$ represents the utilization of the task $T_i$, $u_{max}$ represents the utilization of the task within the set that has the highest utilization, and $U_\tau$ is the total utilization of the task set $\tau$, where $U_\tau$ is defined by Equation (2) below:

Equation (2)

$$U_\tau = \sum_{i=1}^{n} u_i$$

In some cases, the processing apparatus available to execute a task may be a single-core processor. In such a case it is well-known to use the EDF (Earliest Deadline First) algorithm to schedule the execution of tasks by the processor core. According to the EDF algorithm, the priority given to tasks depends only on their respective deadlines. The task having the highest priority is executed first and the other tasks remain in a queue.

Multicore processors have become ubiquitous. In the case of using a multicore processor to execute a task, it is known to use the GEDF (Global-EDF) algorithm to schedule the performance of tasks by the various cores of the processor. All the tasks are in a global queue and have an assigned global priority. Tasks run in a core according to their priority. When a core becomes free it takes from the global queue the task having highest priority.

In a wide variety of applications, a directed acyclic graph (DAG) can be used to model a task that is to be performed by processing apparatus. The DAG comprises vertices and directed edges. Each vertex represents a sub-task (or job) involved in the performance of the overall task, and the directed edges show the dependency between the different sub-tasks, i.e., which sub-task must be completed before another sub-task can be performed. The DAG representation makes it easy to understand the dependency between the sub-tasks making up a task, and the opportunities that exist for parallelism in processing the sub-tasks.

Each vertex in the graph can be an independent sub-task and, to execute such sub-tasks in real-world applications, each one may be deployed in a container such as the containers provided by Docker, Inc. As noted on the Docker Inc. website: "A container is a standard unit of software that packages up code and all its dependencies so the application runs quickly and reliably from one computing environment to another".

**FIG.2** is a drawing of an example of a DAG showing how a task $T_i$ may be decomposed into a set of sub-tasks $V_i^1, V_i^2, V_i^3, V_i^4, V_i^5$, and $V_i^6$. In **FIG.2,** the parameters $c_i$ indicated for the respective vertices (sub-tasks) indicate their execution requirement, that is, the amount of processing required to execute this sub-task. Incidentally, it is common for the execution requirement to designate the number of CPU cycles required for execution of this sub-task, or time per se, and in applications involving the scheduling of real-time tasks time per se may be preferred.

Considering the dependencies of the sub-tasks, it can be understood from **FIG.2** that:

- execution of sub-task $V_i^2$ cannot begin until execution of sub-task $V_i^1$ has been completed,

- execution of sub-task $V_i^3$ cannot begin until execution of both of sub-tasks $V_i^1$ and $V_i^5$ has completed,

- execution of sub-task $V_i^4$ cannot begin until execution of both of sub-tasks $V_i^2$ and $V_i^3$ has completed, and

- execution of sub-task $V_i^6$ cannot begin until execution of sub-task $V_i^4$ has been completed.

The DAG task has a critical path length which corresponds to the longest path through the graph in terms of execution requirement, considering the dependencies inherent in the graph. In the case of the DAG task represented in **FIG.2** the longest path through the graph is from $V_i^5$ to $V_i^3$ to $V_i^4$. So, the critical path length is equal to 12. Considering the opportunities for parallel-processing, it can be understood from **FIG.2** that, in principle, sub-tasks tasks $V_i^2$, $V_i^3$, and $V_i^6$ could be executed in parallel.

A task that can be represented using a DAG may be referred to as a DAG task. A scheduling approach for DAG tasks has been described by Saifullah et al in "Parallel Real-Time Scheduling of DAGs" (IEEE Trans. Parallel Distributed Syst., vol.25, no.12, 2014, pp.3242-3252), the entire contents of which are hereby incorporated by reference. In order to schedule a general DAG task, the Saifullah et al approach implements a task decomposition that transforms the vertices of the DAG into sequential jobs, each having its own deadline and offset. The jobs can then be scheduled either pre-emptively or non-preemptively. Saifullah et al showed that in the case of applying their DAG task decomposition algorithm and then scheduling the resulting jobs using pre-emptive GEDF, it could be guaranteed that scheduling would be possible, respecting the tasks' timing constraints, for a set $\tau$ of real-time DAG tasks being executed by a multicore processor $i$ having a number of cores $M_i$, provided that equation (3) below is respected:

Equation (3)

$$U_\tau \leq M_i/4$$

Unfortunately, the scheduling approach described in the preceding paragraph does not take into account the energy consumption involved in the processing and, in particular, does not schedule execution of the tasks in a manner that seeks to reduce energy consumption.

Various power-management techniques are known for reducing energy consumption when processing nodes (i.e., processors, cores) execute tasks. For instance, dynamic voltage and frequency scaling (DVFS) techniques adjust the frequency of a CPU according to the current workload, by controlling the CPU voltage. At times when the workload is heavy the CPU voltage and frequency are set high, whereas at times when the workload is light the CPU voltage and frequency can be reduced so as to reduce the power required to perform the processing. DPM (dynamic power management) techniques dynamically control power usage, and thus possibly energy consumption, through controlling the CPU frequency by selecting among a number of available CPU operating modes, e.g. sleep (idle) and active (running). Power-management techniques such as these enable processing apparatus to perform required tasks using the minimum amount of power. **FIG.3** illustrates how, through use of power-management techniques, CPU voltage may vary with CPU workload in an example showing a pattern of variation in CPU workload (demand). The top diagram in **FIG.3** illustrates a case where the CPU voltage is varied by applying DPM techniques to change the CPU operating mode. The bottom diagram in **FIG.3** illustrates a case where the CPU voltage is varied by an integrated voltage regulator incorporated into the CPU (e.g., as in intel® Core™ processors of 4th and subsequent generations).

Research is underway to develop so-called "power-aware" scheduling techniques, i.e., scheduling techniques that can schedule execution of tasks by processing apparatus in a manner that minimizes, or at least reduces, the energy consumption. In "Node Scaling Analysis for Power-Aware Real-Time Tasks Scheduling" (IEEE Transactions on Computers, Vol.65, No.8, August 2016, pp 2510-2521), the entire contents of which are hereby incorporated by reference, Yu et al have proposed an approach which seeks to reduce energy consumption by adjusting an initial schedule that has been generated by a scheduling algorithm. The adjustment increases the number of processing nodes (here, processor cores) which execute the processing but slows down the speed (processor clock frequency) so as to obtain an overall reduction in energy consumption. In the Yu et al proposal, in order to determine the appropriate adjustment in the number of cores and the core speed, the number of cores and core speed initially scheduled for processing the overall task set is considered (as well as certain inherent characteristics of the processing unit itself). In the Yu et al proposal, each real-time task in the set consists of a sequence of real-time jobs which must be performed one after the other. The Yu et al proposal does not consider how to schedule DAG tasks.

The present invention has been made in the light of the above issues.

## Summary of the Invention

The present invention provides a computer-implemented method of scheduling periodic real-time tasks on a multi-core processor, said tasks comprising sub-tasks and sub-task dependencies capable of representation by a directed acyclic graph, the method comprising:

decomposing a task into sub-tasks according to a directed-acyclic-graph representation of the task;
generating a timing diagram assuming an infinite number of processor cores are available to process sub-tasks in parallel, said timing diagram representing execution of said sub-tasks on a schedule respecting the deadlines and dependencies of the sub-tasks defined by the directed-acyclic-graph;
segmenting the timing diagram based on release times and deadlines of the sub-tasks, each segment including one or more parallel processing threads to execute, respectively, at least part of a sub-task by a respective processor core;
for each segment, dependent on the workload in the segment, deciding the frequency and/or voltage to be used by the processor core or cores to execute the one or more parallel processing threads of the segment, said decision setting the processor-core frequency and/or voltage to reduce power consumption to an extent that still enables respect of the sub-task deadlines; and
scheduling execution of the sub-tasks of the segments assuming the processor-core frequencies and/or voltages set in the deciding step.

Embodiments of scheduling methods according to the invention enable periodic real-time DAG tasks to be scheduled in an energy-efficient manner.

In the above-mentioned scheduling methods according to the invention, the scheduling of execution of the sub-tasks of the segments is performed using a global earliest deadline first algorithm. Use of GEDF for scheduling the sub-tasks of the segments ensures that the timing constraints of the sub-tasks are met.

In certain preferred embodiments of the invention the generating of the timing diagram assigns to each segment a first number, $m$, of processor cores operating at a first speed, $s$; and the deciding of processor-core frequency and/or speed in respect of a segment changes the number of processor cores assigned to the segment to a second number $m'$ and selects a second speed $s'$ for the second number of processor cores, according to the following process:

- determine whether the maximum utilization among the utilizations of the sub-task threads executing in the segment is less than or equal to $s_B/s_{max}$, where $s_{max}$ is the maximal speed of the processor cores and $s_B$ is a speed bound defined as $s_B = \left(\frac{P_s}{2C}\right)^{1/3}$ where $P_s$ and $C$ are constants in the power consumption function of the processor,

- in the case where the highest utilization $u_{max}$ is less than or equal to $s_B/s_{max}$, decide the second speed $s'$ to be equal to $s_B$, and decide the second number $m'$ of processor cores to be equal to $\left\lceil \frac{m \times s}{s_B} \right\rceil$, and

- in the case where the highest utilization $u_{max}$ is greater than value $s_B/s_{max}$, decide the second speed $s'$ to be equal to $u_{max} \times s_{max}$, and decide the second number $m'$ of processor cores to be equal to $\left\lceil \frac{m \times s}{u_{max} \times s_{max}} \right\rceil$.

Use of the above-described node-scaling approach can produce power savings that are close to optimal.

The present invention still further provides a scheduling system configured to schedule periodic real-time tasks on a multi-core processor, said tasks comprising sub-tasks and sub-task dependencies capable of representation by a directed acyclic graph, said system comprising a computing apparatus programmed to execute instructions to perform any of the above-described scheduling methods. Such a scheduling system may be embodied in an edge server.

The present invention still further provides a computer program comprising instructions which, when the program is executed by a processor of a computing apparatus, cause said processor unit to perform any of the above-described scheduling methods.

The present invention yet further provides a computer-readable medium comprising instructions which, when executed by a processor of a computing apparatus, cause the processor to perform to perform any of the above-described scheduling methods.

The techniques of the present invention may be applied to schedule performance of real-time tasks in many different applications including but not limited to control of autonomous vehicles, tracking of moving objects or persons, and many more.

## Brief Description of the Drawings

Further features and advantages of the present invention will become apparent from the following description of certain embodiments thereof, given by way of illustration only, not limitation, with reference to the accompanying drawings in which:

FIG. 1 is a diagram that schematically illustrates a periodic task for execution by processing apparatus;

FIG. 2 is a diagram illustrating a directed acyclic graph (DAG) representing the sub-tasks involved in an example task that is to be executed by processing apparatus;

FIG. 3 illustrates how CPU voltage may be adjusted dependent on CPU workload, in order to reduce energy consumption, according to two different known approaches;

FIG. 4 is a flow diagram illustrating an example of a computer-implemented scheduling method according to an embodiment of the invention;

FIG. 5 is a timing diagram showing how the example task represented by the DAG of FIG.2 can be decomposed, and how the decomposition can define segments in the processing;

FIG. 6 is a block diagram illustrating an example architecture for implementing a scheduling system according to an embodiment of the invention;

FIG. 7 is a first graph comparing, on the one hand, the power consumption involved in processing periodic real-time tasks that have been scheduled using various known scheduling algorithms with, on the other hand, the power consumption achieved when scheduling the same tasks using an embodiment of the computer-implemented scheduling method according to the invention, in a case where the period of the tasks is derived from a Gamma distribution;

FIG. 8 is a second graph comparing, on the one hand, the power consumption involved in processing periodic real-time tasks that have been scheduled using various known scheduling algorithms with, on the other hand, the power consumption achieved when scheduling the same tasks using an embodiment of the computer-implemented scheduling method according to the invention, in a case where the period of the tasks is harmonic;

FIG. 9 is a diagram illustrating a tracking application which generates a task set that may be scheduled using scheduling methods and systems according to the present invention; and

FIG. 10 is a diagram illustrating components of an example system for implementing the tracking application of FIG.9, using edge devices and distributed servers that employ power-aware scheduling methods according to the present invention.

## Detailed Description of Example Embodiments

The present invention provides embodiments of computer-implemented scheduling methods, and corresponding scheduling systems, that incorporate measures that seek to reduce energy consumption.

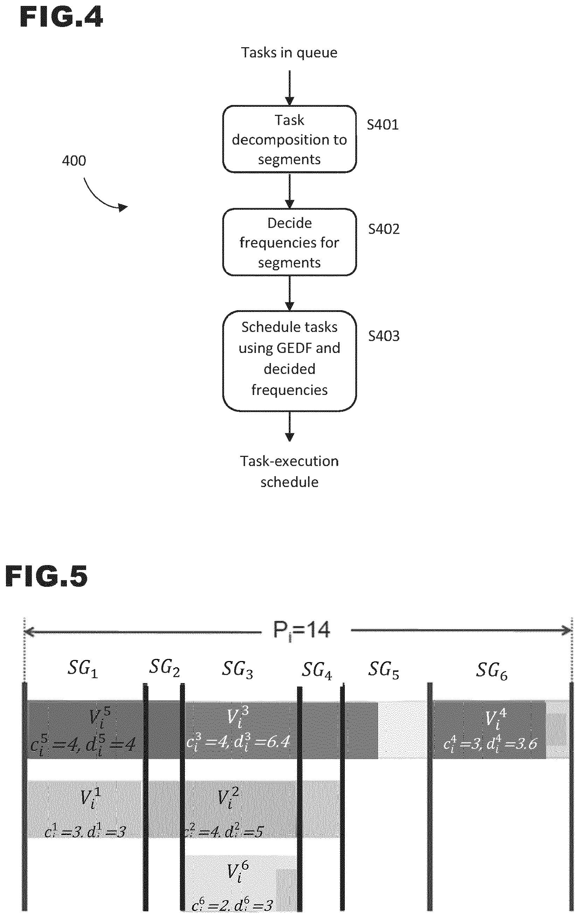

A computer-implemented scheduling method 400 according to a first embodiment of the invention will now be described with reference to **FIGs.4** and **5.**

The main steps in the scheduling method 400 according to the first embodiment are illustrated in the flow diagram of **FIG.4.** It is assumed that there are a certain number of periodic real-time DAG tasks that need to be executed by a processing system, and that these tasks are queued.

In a step S401, the tasks in the queue are decomposed into segments. The preferred process for decomposing a task into segments will be discussed with reference to **FIG.5.** To facilitate understanding of the invention the discussion below considers an example in which a task to be executed by a processing system is a task $T_i$ that can be represented by the DAG of **FIG.2.** However, the skilled person will readily understand how to apply the teaching below for scheduling other tasks that would be represented using different DAGs, and for scheduling a set T of tasks $\{T_1, T_2, \dots, T_n\}$.

In the scheduling technique described by Saifullah et al op. cit., in order to determine deadlines and release times for different sub-tasks, there is an intermediate step in which tasks are decomposed into segments and the decomposition can be represented using a type of synthetic timing diagram. First of all the DAG task is represented using a timing diagram $T_i^\infty$ generated based on the assumption that the available number of processing nodes is infinite, whereby a maximum use of parallel processing is possible. This timing diagram $T_i^\infty$ is then divided up into segments by placing a vertical line in the timing diagram at each location where a sub-task starts or ends, and the segmented timing diagram may be considered to be a synthetic timing diagram $T_i^{syn}$.

In a similar way, in preferred embodiments of the invention the DAG task is represented using a timing diagram $T_i^\infty$ generated based on the assumption that the available number of processing nodes is infinite. However, then this timing diagram $T_i^\infty$ is divided up into segments by placing a vertical line at each location where a sub-task starts and at the sub-task's deadline, yielding a new synthetic timing diagram $T_i^{syn\prime}$.

**FIG.5** represents a synthetic timing diagram $T_i^{syn\prime}$ of this type generated for the example task represented in **FIG.2**. In **FIG.5**, each sub-task V is labelled and its execution requirement c and its deadline *d* are indicated.

It may be considered that the period between a pair of vertical lines in **FIG.5** constitutes a segment *SG* of the synthetic timing diagram $T_i^{syn}$ of **FIG.5**, and that there is a sequence of six segments: $\left\{SG_i^1, SG_i^2, SG_i^3, SGt_i^4, SG_i^5, SG_i^6\right\}$. In **FIG.5**, $P_i$ represents the period of the task $T_i$. Parts of different sub-tasks that are in the same segment *SG* may be thought of as threads of execution running in parallel.

In the Saifullah et al approach, after their segment parameters have been determined, the individual deadlines and release times of each sub-task are determined from the deadlines and release times of the segments in which they are located, and the notion of segments ceases to be relevant. However, in the preferred embodiments of the present invention power-saving measures are implemented on the basis of the segments defined in $T_i^{syn\prime}$.

More specifically, in step S402 of the method 400, for each segment $SG_j$, an operating frequency $f_j$ is selected for all the processing nodes involved in processing tasks during that segment $SG_j$. Various power-saving algorithms can be applied to determine an appropriate frequency setting, for example known DVFS techniques. However, in preferred embodiments of the invention the number of processing nodes involved in parallel-processing the sub-tasks of a given segment is extended from the initial number m defined in the synthetic timing diagram $T_i^{syn\prime}$ to an extended number *m',* and the speeds of the processing nodes are reduced from the initial speed *s* defined in the synthetic timing diagram $T_i^{syn\prime}$ to a reduced speed *s',* according to the node-scaling approach described by Yu et al op. cit. This enables a reduction to be achieved in the energy consumption involved in executing the processing allocated to this segment. The operating frequency $f_j$ selected in respect of a segment $SG_j$ corresponds to the reduced speed *s'* determined for the extended number *m',* of processing nodes executing sub-tasks in segment $SG_j$.

The node-scaling approach involves the following steps:

- let $s_{max}$ be the maximal speed of the processor cores
- a determination is made, in respect of the sub-task threads being parallel-processed in this segment $SG_j$, as to whether the highest utilization $u_{max}$ among the utilizations of the overall sub-tasks having portions in this segment is less than or equal to a value $s_B / s_{max}$, where $s_B$ is a speed bound and is defined as $s_B = \left(\frac{P_s}{2C}\right)^{1/3}$. $P_s$ and C are constants in the power consumption function of the processor (and can be determined by running applications in the processor, as explained in Yu et al op. cit.).

- in the case where the highest utilization $u_{max}$ is less than or equal to value $\frac{s_B}{s_{max}}$, the adjusted core speed $s'$ is set to $s_B$, and the number of processing nodes is extended to $m' = \left\lfloor \frac{m \times s}{s_B} \right\rfloor$.

- in the case where the highest utilization $u_{max}$ is greater than value $\frac{s_B}{s_{max}}$, the adjusted core speed $s'$ is set to $u_{max} \times s_{max}$, and the number of processing nodes is set at $m' = \left\lfloor \frac{m \times s}{u_{max} \times s_{max}} \right\rfloor$.

Then, in step S403 of method 400, the scheduling of the sub-tasks is performed, assuming the processing node numbers $m'$ and speeds $s'$ determined in step S402 for each segment $SG_j$. In preferred embodiments of the invention the scheduling that is performed in step S403 makes use of the GEDF algorithm.

It should be understood that the segmenting and node-scaling approaches are used to calculate the power bound: that is, for each segment we use this approach to calculate the power bound which will be used to decide the optimal CPU speed. The scheduling of the tasks in the segment is performed using the EDF algorithm.

In effect, the method 400 cuts jobs into segments according to their release time and deadline, and the frequencies of processing nodes (cores) for jobs having the same release time are set in a manner which takes into account reduction in energy consumption. According to preferred embodiments of the scheduling method, in each segment the tasks are scheduled by global EDF, and the frequencies of cores are computed according to the method of Yu et al op. cit. The setting of the processing nodes to the computed operating frequencies may be achieved using frequency-adjustment tools provided in commercially-available processing devices (for example, when working on an Nvidia Nano platform, the nvpmodel toolkit may be used to set the computed frequencies).

The scheduling technique provided by the present invention is referred to in this document as SEDF, in view of the fact that it employs the GEDF algorithm on a per segment basis.

The segmentation in SEDF is dynamic, and new arriving tasks can be considered immediately and grouped into segments. Therefore, SEDF can be used in both static scheduling and dynamic scheduling for real-time DAG tasks in a real multi-core device.

An implementation of the overall process may be represented by the logical flow set out below, in which the input is a set T of tasks $\{T_1, T_2, \dots, T_n\}$, and the number of available processing cores is $N$. The output from the process is a schedule for execution of the task set. The scheduling may be performed by a processing device to work out how to schedule its own execution of tasks. On the other hand, the scheduling may be performed by a first processing device to work out a schedule according to which a second device will execute the tasks.

Logical flow:

$time \leftarrow 0, SE \leftarrow \varnothing;$ // SE is a set of tasks and is used to collect all the sub-tasks in the segment

while !stop do

    if $time = T_i$ 's release time then

        $SE \leftarrow SE \cup \{ T_i \};$

    end

    if $|SE| \geq N$ then

        sort tasks of $SE$ in ascending order of tasks' deadline;

    end

    set frequencies according to method described above (from "Node Scaling Analysis for Power-Aware Real-Time Tasks Scheduling" by Yu et al op. cit.);

        execute all tasks in $SE$ with global EDF scheduling;

        if $Ti$ completes then

            $SE \leftarrow SE - \{ T_i \};$

        end

        $time \leftarrow time + 1;$

    End

SEDF is based on the estimation of the optimal power consumption theory. The estimation of the optimal power consumption for a real-time DAG task set which can be modelled as an optimization problem is NP-Hard. Inspired by dynamic programming which simplifies a complicated problem by breaking it down into simpler sub-problems in a recursive manner, tasks are aligned into several parallel threads and broken down into small segments according to their release time and deadlines to simplify the problem solving. In each segment, there are independent tasks with the same release time running on a multi-core system, and DVFS can be applied in each segment to optimize the power consumption of tasks.

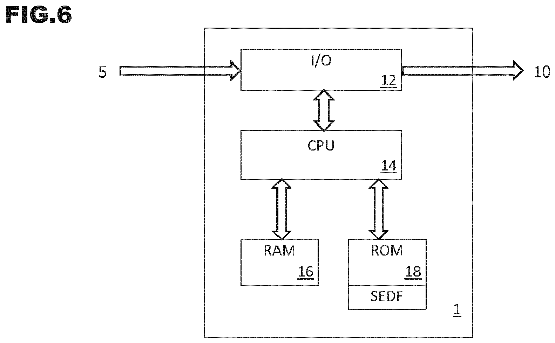

The scheduling methods provided by the invention are conveniently put into practice as computer-implemented methods. Thus, scheduling systems according to the present invention may be implemented on a general-purpose computer or device having computing capabilities, by suitable programming of the computer. Thus, scheduling methods according to the invention may be implemented as illustrated schematically in **FIG.6,** using a system architecture that comprises a general-purpose computing apparatus 1 having an input/output interface 12, a CPU 14, working memory (e.g. RAM) 16 and long-term storage (e.g. ROM) 18 storing a computer program comprising instructions which, when implemented by the CPU 14 of the computing apparatus, cause the computing apparatus to perform the SEDF algorithm to schedule periodic real-time DAG tasks whose details 5 are input via the input/output interface (or may be generated internally to the computing apparatus 1). The computing apparatus 1 generates the schedule for execution of the tasks and outputs the schedule 10 via the input/output interface 12. Alternatively, If the computing apparatus is working out a schedule so that it can itself perform the tasks in question, the apparatus 1 executes the tasks according to the schedule determined by the SEDF algorithm. It is to be understood that, in several applications, the scheduling systems according to the invention comprise one or a plurality of processing devices, e.g., servers, notably edge servers.

Furthermore, the present invention provides a computer program containing instructions which, when executed on computing apparatus, cause the apparatus to perform the method steps of one or more of the methods described above.

The present invention further provides a non-transitory computer-readable medium storing instructions that, when executed by a computer, cause the computer to perform the method steps of one or more of the methods described above.

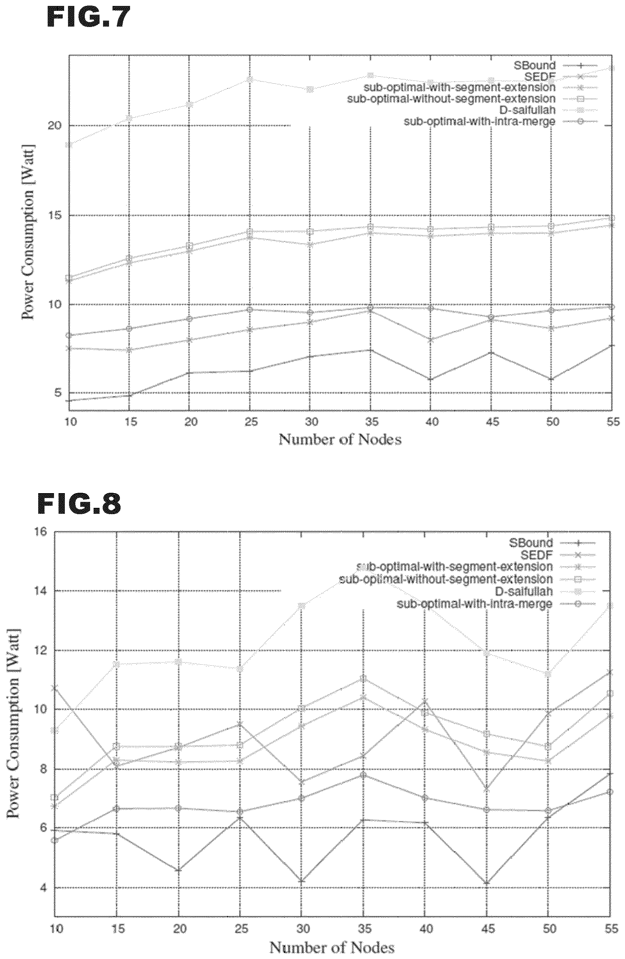

Simulations were performed to compare, on the one hand, the power consumption involved in executing periodic real-time DAG tasks according to scheduling determined by various known scheduling algorithms with, on the other hand, the power consumption achieved when scheduling the same tasks using an embodiment of the SEDF scheduling method according to the invention. The results of the simulations are illustrated in **FIG. 7** and in **FIG.8**. **FIG. 7** is a first graph that shows results obtained in the case where the modelled tasks had an arbitrary period $P_i$ with this period being modelled according to a Gamma distribution. **FIG. 8** is a second graph that shows results obtained in the case where the modelled tasks had a harmonic period, i.e., $P_i = 2^\varepsilon$.

The algorithms compared in the graphs of **FIG.7** and **FIG.8** are, as follows:

**SBound:** this represents the theoretical lower bound on power consumption for executing the target task set.
**SEDF:** this represents the power consumption for executing the target task set according to a schedule generated by an SEDF technique embodying the present invention, assuming the number of processing nodes indicated along the x axis of the graphs.
**D-Saifullah:** this is the power consumption for executing the target task set when the scheduling is performed using the scheduling technique described in Saifullah et al op. cit.
**sub-optimal without segment extension:** this is the power consumption for executing the target task set when the scheduling is performed using a scheduling algorithm that includes task decomposition, where lengths of segments are determined by a convex optimization proposed in "Energy-Efficient Real-Time Scheduling of DAG Tasks" by Ashikahmed Bhuiyan, Zhishan Guo, Abusayeed Saifullah, Nan Guan, and Haoyi Xiong (in ACM Trans. Embed. Comput. Syst. 17, 5 (2018), 84:1-84:25. https://doi.org/10.1145/3241049).
**sub-optimal with segment extension:** this is the power consumption for executing the target task set when the scheduling is performed using a scheduling algorithm that includes task decomposition, where lengths of segments are determined by the convex optimization proposed in Bhuiyan et al op. cit. after performing segment extension.
**sub-optimal with intra merge:** this is the power consumption for executing the target task set when the scheduling is performed using a scheduling algorithm which is an extension of the "sub-optimal-with-segment-extension" algorithm with intra-DAG processor merging. This technique assumes an unlimited number of available processing nodes (processor cores).

As can be seen from **FIG.7,** in the case where the target periodic real-time DAG task set having an arbitrary period is scheduled using the SEDF method embodying the present invention, the power consumption achieved is not far from the theoretical lower limit and, indeed, it is the lowest compared to the results achieved using the other tested scheduling algorithms.

As can be seen from **FIG.8,** in the case where the target periodic real-time DAG task set having a harmonic period is scheduled using the SEDF method embodying the present invention, the power consumption achieved is comparable to the power consumption achieved using the approaches described in Bhuiyan et al op. cit. and it is considerably lower than the power consumption achieved using the Saifullah et al approach.

Thus, it can be seen that the power-aware scheduling methods proposed by the present invention enable periodic real-time DAG tasks to be scheduled in a manner which is energy-efficient.

The scheduling methods and systems according to embodiments of the present invention can be employed for scheduling the execution of periodic DAG tasks in a wide variety of applications. For example, these techniques can be applied in connection with mobile devices (phones and the like) for which conservation of battery power is an important issue, to schedule the execution of tasks (e.g., tasks involved in streaming) in an energy-efficient manner. Another application is to schedule execution of tasks in vehicle ad hoc networks, where sensor data processing often involves execution of real-time DAG tasks on edge devices or modules. Indeed, there are many edge computing scenarios where application of the scheduling methods and systems provided by the present invention can provide advantages. Below one example of such a scenario shall be discussed to facilitate understanding of the utility of the invention.

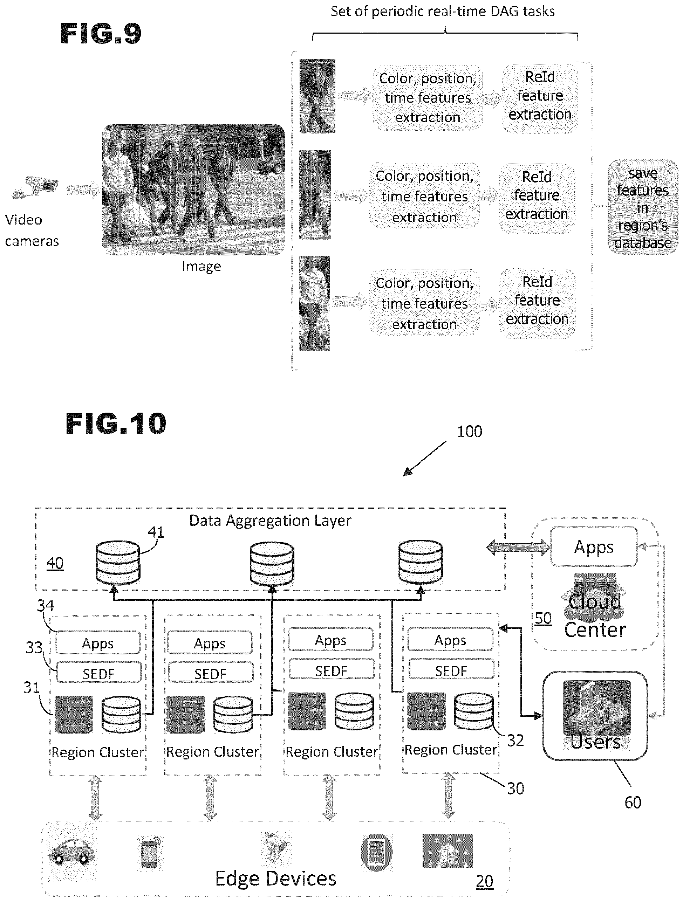

**FIG.9** illustrates a scenario in which multi-channel cameras generate video streams showing a scene in which there are moving objects (in this case, people). Suppose it is desired to track individuals and their movements, e.g., for collision-avoidance, for triggering of emergency-response (e.g., in so-called "smart security systems"), and so on. Such an application generates a set of periodic DAG tasks that require execution. A large volume of video data is generated and, in principle, it could be transmitted to a remote location so that a cloud computing platform could execute the target task set: for example, to extract features from the video, to identify individuals and to track their movements. However, in many applications - for instance, collision-avoidance or a smart security system - real-time processing is desirable. Traditional cloud computing has transmission latency and there may be data privacy problems involved in transmitting the data in question from the data-collection point to the location where the cloud-computing platform is situated. In the scenario illustrated in **FIG.9,** a set of periodic real-time DAG tasks is executed locally, e.g., on one or more edge devices or edge servers, and the results of this processing are transmitted off-site, e.g., to a cloud computing platform for further processing.

In the example illustrated in **FIG.9,** each image captured by the video cameras is analysed locally so as to identify image regions showing respective different individuals, to extract features of colour, position and time characterizing the individual shown in the identified region, and to extract re-ID features that track a target person in views generated by multiple cameras. This recurrent set of processes constitutes a set of periodic real-time DAG tasks that are intended for execution on one or more edge devices/servers in the vicinity of the video cameras that generated the images. The features extracted from the images by execution of this task set can then be stored, for example in a database. It may not matter if there is a certain latency in the sending of the extracted feature data to the database and so, to save on infrastructure, a regional database may be used to store feature data relating to images captured by video cameras at a variety of locations.

**FIG.10** is a diagram illustrating components in an example system 100 suitable for implementing the tracking application of **FIG.9,** using edge devices and distributed servers that employ power-aware scheduling methods according to the present invention.

In the example illustrated in **FIG.10,** the system 100 includes a number of edge devices 20 which may include video cameras, vehicles, mobile devices (phones, etc.), tablets, smart home devices, and so on. Typically, the edge devices 20 are distributed over a wide geographical area. In different regions, there are respective regional clusters 30 of resources including processing apparatus 31, storage devices 32 and so on which, in this implementation, include one or more edge servers 31 configured to implement scheduling using an SEDF algorithm 33 according to the present invention.

The system 100 may be configured to implement a variety of applications, not just the tracking application illustrated in FIG.9. Accordingly, the regional clusters include program code 34 enabling the implementation of the various different applications. The system 100 includes a data aggregation layer 40 to enable data from the different regions to be collected together, notably in one or more databases 41. A cloud computing center 50 exchanges data with the data aggregation layer in order to perform additional processing involved in execution of the applications, such as the tracking application of **FIG.9.** Users 60 may interact with the cloud computing center 50 and/or the regional clusters 30 depending on the application.

Variants

Although the present invention has been described above with reference to certain specific embodiments, it will be understood that the invention is not limited by the particularities of the specific embodiments but, to the contrary, that numerous variations, modifications and developments may be made in the above-described embodiments within the scope of the appended claims.

**Claims**

1. A computer-implemented method of scheduling periodic real-time tasks on a multi-core processor, said tasks comprising sub-tasks and dependencies capable of representation by a directed acyclic graph, the method comprising:

    decomposing a task into sub-tasks according to a directed-acyclic-graph representation of the task;
    generating a timing diagram assuming an infinite number of processor cores are available to process sub-tasks in parallel, said timing diagram representing execution of said sub-tasks on a schedule respecting the deadlines and dependencies of the sub-tasks defined by the directed-acyclic-graph;
    segmenting the timing diagram based on release times and deadlines of the sub-tasks, each segment including one or more parallel processing threads for execution, respectively, of at least part of a sub-task by a respective processor core;
    for each segment, dependent on the workload in the segment, deciding the frequency and/or voltage to be used by the processor core or cores to execute the one or more parallel processing threads of the segment, said decision setting the processor-core frequency and/or voltage to reduce power consumption to an extent that still enables respect of the sub-task deadlines; and
    scheduling execution of the sub-tasks of the segments assuming the processor-core frequencies and/or voltages set in the deciding step.

2. The computer-implemented scheduling method according to claim 1, wherein the scheduling of execution of the sub-tasks of the segments is performed using a global earliest deadline first algorithm.

3. The computer-implemented scheduling method according to claim 1 or 2, wherein:

the generating of the timing diagram assigns to each segment a first number, *m,* of processor cores operating at a first speed, s; and

the deciding of processor-core frequency and/or speed in respect of a segment changes the number of processor cores assigned to the segment to a second number *m'* and selects a second speed *s'* for the second number of processor cores, according to the following process:

- determine whether the maximum utilization among the utilizations of the sub-tasks having portions in the segment is less than or equal to $s_B/s_{max}$ , where $s_{max}$ is the maximal speed of the processor cores and

$s_B$ is a speed bound defined as $s_B = \left(\frac{P_s}{2C}\right)^{1/3}$ where $P_s$ and $C$ are constants in the power consumption function of the processor,

- in the case where the highest utilization $u_{max}$ is less than or equal to $s_B/s_{max}$ , decide the second speed *s'* to be equal to $s_B$, and decide the second number m' of processor cores to be equal to $\left\lceil \frac{m \times s}{s_B} \right\rceil$ , and

- in the case where the highest utilization $u_{max}$ is greater than value $s_B/s_{max}$ , decide the second speed *s'* to be equal to $u_{max} \times s_{max}$, and decide the second number m' of processor cores to be equal to $\left\lceil \frac{m \times s}{u_{max} \times s_{max}} \right\rceil$ .

4. A scheduling system configured to schedule periodic real-time tasks on a multi-core processor, said tasks comprising sub-tasks and dependencies capable of representation by a directed acyclic graph, said system comprising a computing apparatus programmed to execute instructions to perform a method according to any one of claims 1 to 3.

5. An edge server comprising the scheduling system of claim 4.

6. A computer program comprising instructions which, when the program is executed by a processing unit of a computing apparatus, cause said processing unit to perform a scheduling method according to any one of claims 1 to 3.

7. A computer-readable medium comprising instructions which, when executed by a processor of a computing apparatus, cause the processor to perform a scheduling method according to any one of claims 1 to 3.

# FIG.1

A Periodic task

# FIG.2

# FIG.3

# FIG.4

Tasks in queue

Task decomposition to segments — S401

Decide frequencies for segments — S402

Schedule tasks using GEDF and decided frequencies — S403

Task-execution schedule

400

# FIG.5

$P_i = 14$

$SG_1$  $SG_2$  $SG_3$  $SG_4$  $SG_5$  $SG_6$

$V_i^5$
$c_i^5 = 4, d_i^5 = 4$

$V_i^3$
$c_i^3 = 4, d_i^3 = 6.4$

$V_i^4$
$c_i^4 = 3, d_i^4 = 3.6$

$V_i^1$
$c_i^1 = 3, d_i^1 = 3$

$V_i^2$
$c_i^2 = 4, d_i^2 = 5$

$V_i^6$
$c_i^6 = 2, d_i^6 = 3$

**FIG.6**

# FIG.7

# FIG.8

**FIG.9**

Set of periodic real-time DAG tasks

Video cameras

Image

Color, position, time features extraction → ReId feature extraction

Color, position, time features extraction → ReId feature extraction

Color, position, time features extraction → ReId feature extraction

save features in region's database

**FIG.10**

100

Data Aggregation Layer

40    41

34

33  Apps    Apps    Apps    Apps
    SEDF    SEDF    SEDF    SEDF
31

Region Cluster    Region Cluster    Region Cluster    Region Cluster    32

30

Apps

Cloud Center
50

Users
60

Edge Devices    20

Europäisches
Patentamt

European
Patent Office

Office européen
des brevets

# EUROPEAN SEARCH REPORT

Application Number

EP 23 18 0146

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | BHUIYAN ASHIKAHMED ZHISHAN GUO@UCF EDU ET AL: "Energy-Efficient Real-Time Scheduling of DAG Tasks", ACM TRANSACTIONS ON EMBEDDED COMPUTING SYSTEMS, ACM, NEW YORK, NY, US, vol. 17, no. 5, 17 September 2018 (2018-09-17), pages 1-25, XP058677211, ISSN: 1539-9087, DOI: 10.1145/3241049 * section 2; page 3 * * page 6 - page 7 * * section 3.3; page 9 * * page 10 * * section 4.4; page 17 * * figures 11,12 * * pages 18,23 * | 1-7 | INV. G06F9/48 |
| X | US 2021/247985 A1 (VENKATARAMAN ADITYA [US] ET AL) 12 August 2021 (2021-08-12) * paragraphs [0042], [0043], [0046] - [0048], [0051], [0052], [0054], [0078], [0094], [0095], [0148], [0149] * | 1-7 | TECHNICAL FIELDS SEARCHED (IPC) G06F |

The present search report has been drawn up for all claims

| Place of search | Date of completion of the search | Examiner |
|---|---|---|
| The Hague | 22 September 2023 | Buzgan, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 18 0146

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2023

| Patent document cited in search report | | Publication date | Patent family member(s) | | Publication date |
|---|---|---|---|---|---|
| US 2021247985 | A1 | 12-08-2021 | US | 2020073671 A1 | 05-03-2020 |
| | | | US | 2020073714 A1 | 05-03-2020 |
| | | | US | 2021247985 A1 | 12-08-2021 |
| | | | US | 2021349726 A1 | 11-11-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SAIFULLAH et al.** Parallel Real-Time Scheduling of DAGs. *IEEE Trans. Parallel Distributed Syst.*, 2014, vol. 25 (12), 3242-3252
- Node Scaling Analysis for Power-Aware Real-Time Tasks Scheduling. *IEEE Transactions on Computers*, August 2016, vol. 65 (8), 2510-2521
- **ASHIKAHMED BHUIYAN ; ZHISHAN GUO ; ABUSAYEED SAIFULLAH ; NAN GUAN ; HAOYI XIONG.** Energy-Efficient Real-Time Scheduling of DAG Tasks. *ACM Trans. Embed. Comput. Syst.*, 2018, vol. 17 (5), 84-1, 84-25, https://doi.org/10.1145/3241049